# EUROPEAN PATENT APPLICATION

(11) **EP 0 898 383 A2**
(43) Date of publication of application: **24.02.1999**
(21) Application number: 98115278.8
(22) Date of filing: 13.08.1998
(51) Int. Cl.: H04B 7/08, H04B 1/707

(54) **Digital despreading and weighting receiver**

(30) Priority: 20.08.1997 JP 238952/97
(71) Applicant: MATSUSHITA ELECTRIC INDUSTRIAL CO., LTD., Kadoma-shi, Osaka-fu, 571 (JP)
(72) Inventor: Futagi, Sadaki, Room No. 203, Sagamihara-shi, Kanagawa 229 (JP)
(74) Representative: Grünecker, Kinkeldey, Stockmair & Schwanhäusser Anwaltssozietät

(57) **Abstract**

De-spread sections 35A, 35B, and 35C de-spread received multipath signals 30 based on time data 34A, 34B, and 34C, and output de-spreading signals 36A, 36B, and 36C to a weighting circuit 37, respectively. The weighting circuit 37 performs a threshold determination using an absolute value of the de-spreading signals 36A, 36B, and 36C. When each of the de-spreading signals is below a certain threshold value, a weighting factor is set to 0. When each of the de-spreading signals is more than the threshold value, a complex conjugate of phase data of the de-spreading signals 36A, 36B, and 36C is used as a weighting factor. The de-spreading signals 36A, 36B, and 36C are multiplied by the corresponding weighting factor, respectively.

## Description

### BACKGROUND OF THE INVENTION

### Field of the Invention

The present invention relates to a digital receiving apparatus used in a telephone system for a mobile communication and a data communication system for a mobile communication.

### Description of the Related Art

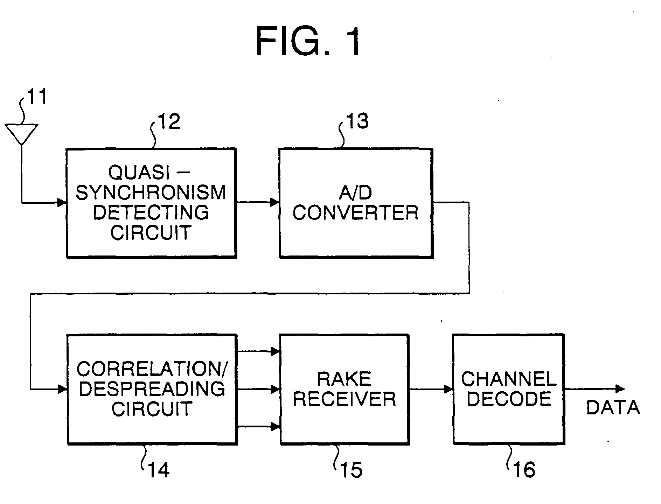

The conventional digital receiving apparatus will be explained with reference to the drawings. FIG. 1 is a general view of the conventional digital receiving apparatus.

The conventional digital receiving apparatus receives a radio signal from an antenna 11, and a quasi-synchronism detecting circuit 12 applies a LOCAL frequency to the received radio signal to perform a frequency conversion. The frequency converted signal is input to an AD converter 13 to be converted to a digital signal from an analog signal. The A/D converted signal is input to a correlation/de-spreading circuit 14, so that correlation values are obtained and a de-spreading process is performed. A RAKE receiver 15 synthesizes (adds) output signals of the correlation/de-spreading circuit 14 by suitable weighting. A channel decode provides a de-interleaving process and a Viterbi decoding process to an output signal of the RAKE receiver 15 so as to obtain data.

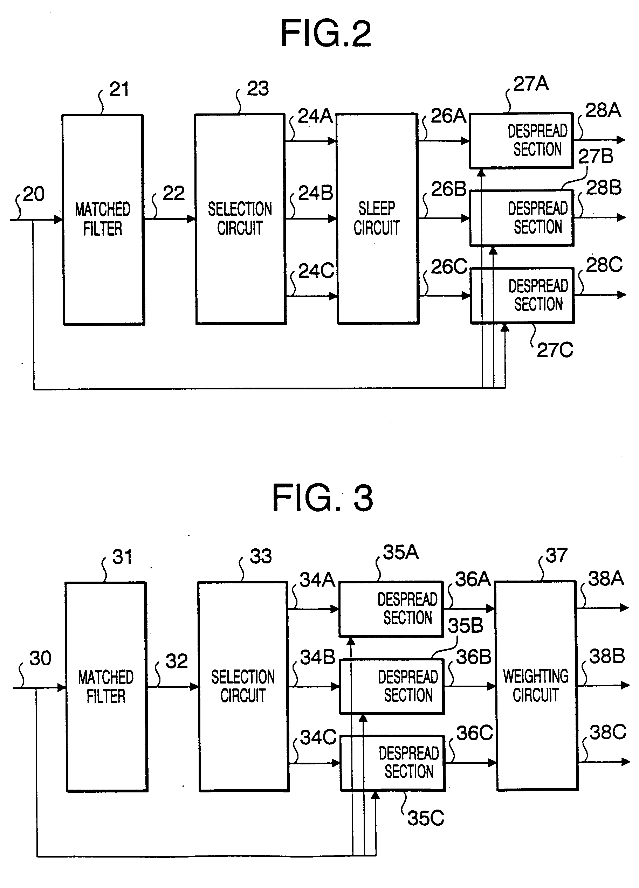

Next, the correlation/de-spreading circuit 14 will be explained with reference to FIG. 2. FIG. 2 is a block diagram showing a general structure of the correlation/de-spreading circuit 14.

Multipath signals 20 received from an antenna (not shown) are input to a matched filter 21. The matched filter 21 detects a time correlation of the received multipath signals 20, and outputs correlation values 22 to a selection circuit 23. The selection circuit 23 selects the upper correlation values up to Nth correlation value from the obtained correlation values 22, and outputs the selected correlation values 24A, 24B, and 24C to a sleep circuit 25. The sleep circuit 24 compares the respective selected correlation values 24A, 24B and 24C with a predetermined threshold value. When the respective correlation values are below the threshold value, the sleep circuit 24 waits for a certain period time and returns. When the respective correlation values are more than the threshold value, the sleep circuit 24 outputs time data 26A, 26B, and 26C without sleeping. Time data 26A, 26B and 26C are time data in the multipath signals of the selected upper correlation values up to the Nth value. Due to this, de-spread sections 27A, 27B, and 27C de-spread the received multipath signals 20 based on time data 26A, 26B, and 26C, and outputs RAKE signals 28A, 28B, and 28C.

However, in the conventional digital receiving apparatus, since the sleep circuit 25 obtains the correlation values used in comparison after being equalized at a certain time interval, time delay occurs. In spite of the fact that the de-spread sections 27A to 27C should be stopped judging from the state of the present multipath signals 20, time data 26A to 26C are output from the sleep circuit 25. As a result, there occurs a phenomenon in which the de-spread sections 27A to 27C generate unnecessary signal components, and a receiving performance is deteriorated.

### SUMMARY OF THE INVENTION

The present invention has been made in consideration of the above-mentioned problem, and an object of the present invention is to provide a digital receiving apparatus, which is capable of controlling the generation of unnecessary signal components from de-spread sections and which is capable of improving a receiving performance.

In order to attain the above object, according to the invention of claim 1, there is provided a digital receiving apparatus comprising de-spreading process means for providing a de-spreading process to a plurality of received multipath signals to output de-spreading signals; and weighting means for controlling a weighting factor multiplying the de-spreading signals based on a comparison result between the de-spreading signals and a threshold value.

According to the above structure, the comparison between the de-spreading signal and the threshold value can be made after the de-spreading process. As a result, when the de-spreading signals are below the threshold value, the generation of unnecessary components from the de-spread sections can be controlled, and the receiving performance can be improved.

### BRIEF DESCRIPTION OF THE DRAWINGS

FIG. 1 is a general view of a conventional digital receiving apparatus;
FIG. 2 is a general view of a correlation/de-spreading circuit in the conventional digital receiving apparatus;
FIG. 3 is a general view of a correlation/de-spreading circuit in the digital receiving apparatus of a first embodiment of the present invention;
FIG. 4 is a general view of a correlation/de-spreading circuit in the digital receiving apparatus of a second embodiment of the present invention;
FIG. 5 is a general view of a correlation/de-spreading circuit in the digital receiving apparatus of a third embodiment of the present invention; and
FIG. 6 is a general view of a correlation/de-spreading circuit in the digital receiving apparatus of a fourth embodiment of the present invention.

### DETAILED DESCRIPTION OF THE PREFERRED EMBODIMENTS

Embodiments of the present invention will now be described with reference to the accompanying drawings.

### (First embodiment)

A digital receiving apparatus of the first embodiment comprises a correlation/de-spreading circuit shown in FIG. 3 in place of the correlation/de-spreading circuit 14 of the conventional digital receiving apparatus of FIG. 1. FIG. 3 is a general view of the correlation/de-spreading circuit in the digital receiving apparatus of the first embodiment of the present invention. As shown in FIG. 3, the correlation/de-spreading circuit of this embodiment receives multipath signals 30 from an antenna (not shown), and inputs the multipath signals 30 to a matched filter 31 and de-spread sections 35A, 35B, and 35C to be described later. The matched filter 31 detects time correlation of the received multipath signals 30, and outputs correlation values 32 to a selection circuit 33. The selection circuit 33 selects upper correlation values up to a Nth correlation value from the obtained correlation values 32, and outputs time data 34A, 34B, and 34C to de-spread sections 35A, 35B, and 35C, respectively. The de-spread sections 35A, 35B, and 35C de-spread the received multipath signals 30 based on time data 34A, 34B, and 34C, and output de-spreading signals 36A, 36B, and 36C to a weighting circuit 37, respectively. The weighting circuit 37 weights the de-spreading signals 36A, 36B, and 36C, and outputs RAKE signals 38A, 38B, and 38C.

An operation of the above-structured digital receiving apparatus will be described as follows:

The matched filter 31 obtains the correlation values 32 of the input received multipath signals 30 so as to be output to the selection circuit 33. The selection circuit 33 selects upper three correlation values having high correlation in a certain period of time, and outputs the upper three time data 34A, 34B, and 34C having high correlation to the de-spread sections 35A, 35B, and 35C, respectively. The de-spread sections 35A, 35B, and 35C de-spread the received multipath signals 30 based on time data 34A, 34B, and 34C, and output de-spreading signals 36A, 36B, and 36C to the weighting circuit 37, respectively. The weighting circuit 37 performs a threshold determination using an absolute value of the respective de-spreading signals 36A, 36B, and 36C. When the respective de-spreading signals are below a certain threshold value, a weighting factor is set to 0. When the respective de-spreading signals are more than the threshold value, a complex conjugate of phase data of the de-spreading signals 36A, 36B, and 36C is used as a weighting factor. The de-spreading signals 36A, 36B, and 36C are multiplied by the corresponding weighting factor, respectively, and the RAKE signals 38A, 38B, and 38C are output, respectively.

Thus, according to the digital receiving apparatus of the first embodiment, the weighting circuit 37, which is provided the output sides of the de-spread sections 35A to 35C, performs the threshold determination of the absolute value of the respective de-spreading signals. Then, when the values are below the threshold value, the weighting factor is set to 0, so that the output of an unnecessary signal can be prevented. As a result, unnecessary signal components can be prevented from being contained in the RAKE signals 38A, 38B, and 38C, and the receiving performance can be improved.

### (Second embodiment)

Next, the following will describe the second embodiment.

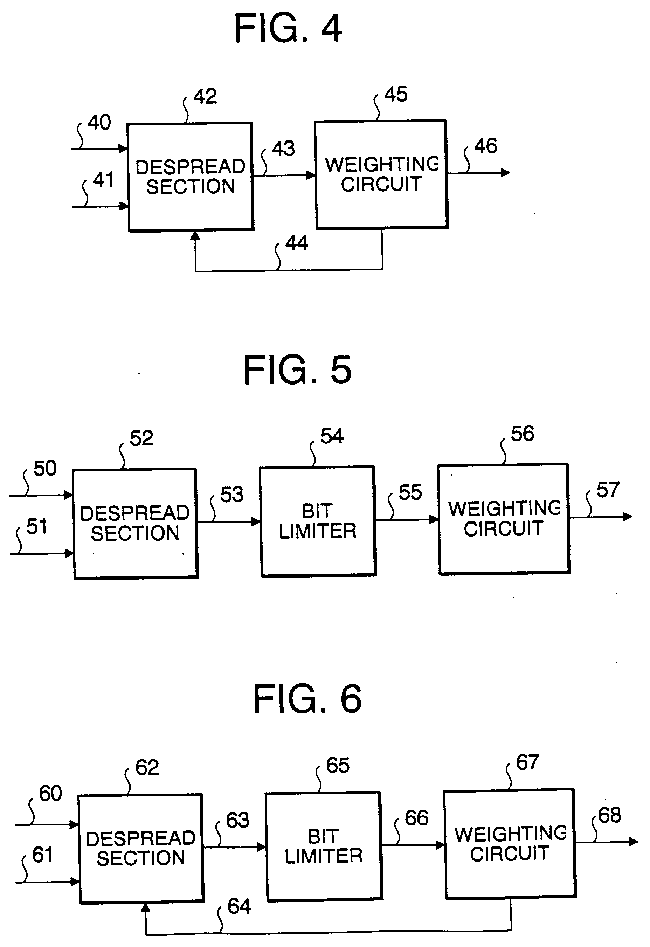

FIG. 4 is a general view of the correlation/de-spreading circuit in the digital receiving apparatus of the second embodiment of the present invention. In the second embodiment, the digital receiving apparatus comprises an de-spread section 42 and a weighting circuit 45 in place of the de-spread sections 35A, 35B, and 35C and the weighting circuit 37 of the first embodiment. In FIG. 4, reference numeral 40 denotes multipath signals received from an antenna, and reference numeral 41 denotes time data of each multipath signal.

The de-spread section 42 de-spreads the received multipath signals 40 based on time data 41, and outputs a de-spreading signal 43 to a weighting circuit 45. The weighting circuit 45 weights the de-spreading signal 43, and outputs a RAKE signal 46 on one hand, and outputs a stop signal 44 to the de-spread section 42 on the other. The de-spread section 42 of FIG. 2 shows a plurality of de-spread sections conceptually, and the plurality of de-spread sections is actually included. For example, as shown in FIG. 1, when three de-spread sections 35A to 35C are used, three time data 41 and three de-spreading signals 43 are used.

An operation of the above-structured digital receiving apparatus will be described.

When the stop signal 44 is in a HIGH level, the de-spread section 42 de-spreads the multipath signals 40 based on time data 41, and outputs the de-spreading signal 43. On the other hand, when the stop signal 44 is in a LOW level, the operation is stopped to reduce power consumption.

The weighting circuit 45 performs the threshold determination using the absolute value of the de-spreading signal 43. When the de-spreading signal 43 is below the threshold value, the weighting factor is set to 0 and the stop signal 44 is set in the LOW level for a fixed period of time. On the other hand, when the de-spreading signal 43 is more than the threshold value, a complex conjugate of phase data of the de-spreading signal 43 is used as a weighting factor. The de-spreading signal 43 is multiplied by the weighting factor, and a RAKE signal 46 is output. At this time, the stop signal 44 is set in the HIGH level, and is output to the de-spread section 42.

Thus, according to the second embodiment, when the de-spreading signal 43 is below the threshold value, the operation of the de-spread section can be stopped, so that power consumption can be reduced. Also, since the generation of unnecessary signal components from the de-spread section can be controlled, the receiving performance can be improved.

### (Third embodiment)

The third embodiment of the present invention will be described. FIG. 5 is a general view of the correlation/de-spreading circuit in the digital receiving apparatus of the third embodiment of the present invention. In the third embodiment, the digital receiving apparatus comprises an de-spread section 52, a bit limiter 54, and a weighting circuit 56 in place of the de-spread sections 35A, 35B, 35C, and the weighting circuit 37 of FIG. 1. In FIG. 5, reference numeral 50 denotes received multipath signals from an antenna, and reference numeral 51 denotes time data of each multipath signal.

The de-spread section 52 de-spreads the received multipath signals 50 based on time data 51, and outputs an de-spread signal 53 to the bit limiter 54. The bit limiter 54 bit limits the de-spreading signal 53, and outputs a bit limited de-spreading signal 55 to the weighting circuit 56. The weighting circuit 56 weights the bit-limited de-spreading signal 55, and outputs a RAKE signal 57. The de-spread section 52 of FIG. 3 shows a plurality of de-spread sections conceptually, and the plurality of de-spread sections is actually included. For example, as shown in FIG. 1, when three de-spread sections 35A to 35C are used, three time data 51 and three de-spreading signals 53 are used.

An operation of the above-structured digital receiving apparatus will be described. The de-spread section 52 de-spreads the received multipath signals 50 based time data 51, and outputs the de-spreading signal 53 to the bit limiter 54. The bit limiter 54 limits the lower bits of the de-spreading signal 53 based on a predetermined threshold value. The threshold value is a criterion of whether or not there is an effective signal to be output to a receiving process system of a back stage. When the de-spreading signal 53, which is more than the threshold value, is input, the signal is output to the weighting circuit 56. In the other cases, the output becomes 0.

In the weighting circuit 56, a complex conjugate of phase data of the de-spreading signal 55, which is subjected to the bit limitation, is used as a weighting factor. Then, the de-spreading signal 55 is multiplied by the weighting factor, and a RAKE signal 57 is output.

Thus, according to the third embodiment, the bit limiter 54 is provided at the input side of the weighting circuit 56, and the signal is not output to the weighting circuit 56 when the de-spreading signal 53, which is lower than the threshold value, is input. As a result, there is no need of the threshold determination in the weighting circuit 56, and the load on the weighting circuit 56 can be reduced with a simple structure in which only the bit limiter 54 is provided.

### (Fourth embodiment)

The fourth embodiment of the present invention will be described. FIG. 6 is a general view of the correlation/de-spreading circuit in the digital receiving apparatus of the fourth embodiment of the present invention. In the fourth embodiment, the digital receiving apparatus comprises an de-spread section 62, a bit limiter 65, and a weighting circuit 67 in place of the de-spread sections 35A, 35B, 35C, and the weighting circuit 37 of FIG. 1. In FIG. 6, reference numeral 60 denotes received multipath signals from an antenna, and reference numeral 61 denotes time data of each multipath signal.

The de-spread section 62 de-spreads the received multipath signals 60 based on time data 61, and outputs an de-spread signal 63 to the bit limiter 65. The bit limiter 65 bit limits the de-spreading signal 63, and outputs a bit limited de-spreading signal 66 to the weighting circuit 67. The bit limiter 65 outputs a stop signal 64 to be described later to the de-spread section 62. The weighting circuit 67 weights the bit-limited de-spreading signal 66, and outputs a RAKE signal 68.

An operation of the above-structured digital receiving apparatus will be described. When the stop signal 64 is set in a HIGH level, the de-spread section 62 de-spreads the received multipath signals 60 based time data 61, and outputs the de-spreading signal 63 to the bit limiter 65. On the other hand, when the stop signal 64 is set in a LOW level, the de-spread section 62 stops the operation to reduce power consumption.

The bit limiter 54 limits the lower bits of the signal to generate an underflow with a threshold value. When the underflow is generated, the stop signal is set in a LOW level for a fixed period of time. At this time, the de-spread section 62 stops the operation. When no underflow is generated, the bit-limited de-spreading signal 66 is output to the weighting circuit 67. The threshold value is a criterion of whether or not there is a signal, and a certain bit showing the threshold value is shifted. When the de-spreading signal 63 is below the threshold value, the output becomes 0. When the de-spreading signal 63 is more than a certain value, the bit-shifted value is obtained. Therefore, there is no need of comparison with the threshold value.

In the weighting circuit 67, a complex conjugate of phase data of the de-spreading signal 66, which is subjected to the bit limitation, is used as a weighting factor. Then, the de-spreading signal 66 is multiplied by the weighting factor, and a RAKE signal 68 is output.

Thus, according to the fourth embodiment, the bit limiter 65 is provided at the input side of the weighting circuit 67, and the signal is not output to the weighting circuit 67 when the de-spreading signal 53, which is lower than the threshold value, is generated. As a result, there is no need of the threshold determination in the weighting circuit 67, and the load on the weighting circuit 67 can be reduced with a simple structure in which only the bit limiter 65 is provided.

Moreover, when the de-spreading signal 63 is below the threshold value, the operation of the de-spread section can be stopped, so that power consumption can be reduced. Also, since the generation of unnecessary signal components from the de-spread section can be controlled, the receiving performance can be improved.

It is noted that the present invention can be applied to a base station apparatus such as a mobile radio communication system, a cellular system, and a mobile station apparatus.

## Claims

1. A digital receiving apparatus comprising:
de-spreading process means(35A,35B,35C) for providing a de-spreading process to a plurality of received multipath signals to output de-spreading signals; and
weighting means(37) for controlling a weighting factor multiplying said de-spreading signals based on a comparison result between said de-spreading signals and a threshold value.

2. The digital receiving apparatus according to claim 1, wherein said weighting means(37) controls to stop an operation of said de-spreading process means when an output signal of said de-spreading process means is below the threshold value.

3. The digital receiving apparatus according to claim 1, wherein said weighting means(37) stops outputs of said de-spreading signals in a state that 0 is set as a weighting factor when said de-spreading signals to be input are below the threshold value, and multiplies said de-spreading signals by a complex conjugate of phase data of said de-spreading signals as a weighting factor when said de-spreading signals to be input are more than the threshold value.

4. A digital receiving apparatus comprising:
de-spreading process means(35A,35B,35C) for providing a de-spreading process to a plurality of received multipath signals to output de-spreading signals:
bit limit means(54) for generating an underflow so as to limit the passage of lower bits of the de-spreading signals when said de-spreading signals being below a threshold value are input; and
weighting means(37) for multiplying an output of said bit limit means by a weighting factor.

5. The digital receiving apparatus according to claim 4, wherein said bit limit means(54) comprises underflow detection means for detecting an underflow, and control means for controlling to stop an operation of said de-spreading process means when said underflow detection means detects the underflow.

6. The digital receiving apparatus according to claim 4, wherein said weighting means(37) multiplies the output of said bit limit means by a complex conjugate of phase data.

7. A digital receiving apparatus comprising:
a matched filter(31) for detecting correlation values of a plurality of received multipath signals;
a selection circuit(33) for selecting upper correlation values up to an Nth correlation value;
a plurality of de-spread sections(35A,35B,35C) for de-spreading the respective multipath signals using said selected plurality of correlation values; and
a weighting circuit(37) for weighting de-spreading signals output from said de-spread sections.

8. A mobile station apparatus, including a mobile station apparatus for receiving and transmitting data between a base station apparatus and the mobile station apparatus in a mobile radio communication system, and comprising a digital receiving apparatus according to any one of claims 1 to 7.

9. A mobile station apparatus, including a base station apparatus for receiving and transmitting data between a mobile station apparatus and the base station apparatus in a mobile radio communication system, and comprising a digital receiving apparatus according to any one of claims 1 to 7.
